# EUROPEAN PATENT SPECIFICATION

(11) **EP 2 425 055 B1**
(45) Date of publication and mention of the grant of the patent: **24.01.2018**
(21) Application number: 10769380.6
(22) Date of filing: 29.04.2010
(51) Int. Cl.: D21F 1/00, D21G 5/00, E04G 1/15, F16P 1/00, D21F 3/00, D21F 5/00

(54) **FIBER WEB MACHINE WITH SERVICE PLATFORM ARRANGEMENT**
FASERVLIESMASCHINE MIT BEDIENBÜHNENANORDNUNG
MACHINE À BANDE FIBREUSE AVEC AGENCEMENT DE PLATEFORME DE SERVICE

(30) Priority: 30.04.2009 FI 20095488
(43) Date of publication of application: 07.03.2012
(73) Proprietor: Valmet Technologies, Inc., 02150 Espoo (FI)
(72) Inventor: LAAKSONEN, Iiro, FI-33710 Tampere (FI); NENONEN, Ville, FI-00710 Helsinki (FI); PELTOSAARI, Lauri, FI-00100 Helsinki (FI); PURASMAA, Tuukka, FI-04210 Talma (FI); SALOJÄRVI, Jussi, FI-40520 Jyväskylä (FI)
(74) Representative: TBK
(86) International application number: PCT/FI2010/050348
(87) International publication number: WO 2010/125246

(56) References cited:
- EP-A1- 1 160 500
- WO-A1-94/29547
- WO-A1-2007/080215
- WO-A1-2007/080215

## Description

The present invention relates to a fiber web machine having a service platform arrangement according to the preamble of patent claim 1.

Many machines and process equipment used for example in industry are large and still access to the vicinity of their components must be arranged for service and operation. Typically this has been taken care of by providing the machine with service platforms placed in appropriate locations. The service platforms must be carried out so that it is safe to move on them and to run and service the machine. Thus the platforms are equipped with railings.

In fiber web machines, there are various partial processes associated with the web formation and the treatment of the web and the components of the fiber web machine performing such processes have been placed optimally in relation to each other in view of the progress of the process. The components of the fiber web machine include also additional apparatus such as fabric reconditioning equipment and measuring equipment etc. It is essential for the operation and service of the fiber web machine that access to the various components has been provided. Further, a fiber web machine comprises service platforms. However, the platforms have often been designed and build separately for each partial process and thus moving between the partial processes may at times be cumbersome for the personnel.

The prior art service platforms of fiber web machines are typically walkways provided in support of brackets in the body of the fiber web machine. This kind of an arrangement is often slow to set up due to among other thing the large number of separate components.

The railings of the service platforms of fiber web machines are typically of tube construction with tube poles at certain spaces to support the essentially horizontal hand rail. The rail may be also in a slightly inclined position for example in connection with stairs. This kind of a tubular construction is fixed to the service platform in a know way so that there is a hole and/or a sleeve at the railing pole in the service platform into which the railing pole is guided and secured with for example through bolts.

Although the structure as such is sturdy and reliable in operation, the building of such a service platform is to some extent inefficient. Further, the structure presupposes great accuracy in the positioning of the sleeves provided in the service platforms for the railing to correspond exactly to the pole division in the railing.

Document WO 2007/080215 A1 discloses a prior art service platform arrangement structured as defined in the preamble of claim 1. This service platform arrangement comprises rubber wheels which make the service platform arrangement moveable, and further moving means for moving the service platform arrangement.

An object of the invention is to provide a fiber web machine having a service platform arrangement which among other things permits more efficient moving between the various components of the fiber web machine and which facilitates the daily work of the personnel.

The object of the invention is obtained in the way described in patent claim 1.

A fiber web machine according to an embodiment of the invention includes a service platforms arrangement comprising at least a railing and a walkway provided in connection with each other. The service platform arrangement has been disposed connected with a fiber web machine to extend along at least two different machine sections essentially at the same horizontal level. The railing of the service platform arrangement is disposed to run essentially at one distance from the center line of the fiber web machine, which distance in transverse direction is essentially the same as the distance of the outer wall of a hood of the drying section following the service platform arrangement in the machine direction.

. A fiber web machine according to an embodiment of the invention includes a service platform arrangement located at least at two different horizontal levels disposed to extend along at least two different machine sections essentially at a horizontal level, Then the walkway of each service platform arrangement extends to at least two different machine sections at a horizontal level of its own.

Preferably the railings of the at least two service platforms at the different horizontal levels have been disposed at the same vertical plane.

According to the invention the service platform arrangement has been provided to extend to the area or the forming and press sections of the fiber web machine.

The railing of the service platform arrangement has been disposed to run essentially at one distance from the center line of the fiber web machine.

Preferably said distance from the center line in the transverse direction is essentially the same as the distance of the outer wall of the hood of the drying section following the service platform in the machine direction.

According to a preferred embodiment of the invention the service platform arrangement of a fiber web machine is formed of a walkway at one horizontal level. Then the walkway has preferably been disposed at the height of at least 2 m.

According to this embodiment of the invention the forming section preferably comprises a fourdrinier former provided with a top wire unit and the walkway of the service platform arrangement has been disposed above the fourdrinier wire. Further, the walkway of the service platform arrangement has preferably been disposed to start in the machine direction essentially from the top wire unit and to extend to the wall surface of the hood of the drying section following the press section.

The additional other characteristic features of the invention are disclosed in the appended patent claims and the following description of the embodiments of the drawings.

With the solution of the invention access to the various sections of the fiber web machine becomes remarkably easier and thus operating and servicing the machine is more efficient and also safer.

The invention and its operation are explained below with reference to the accompanying schematic drawings, in which
Figure 1 illustrates schematically an embodiment of a fiber web machine according to the invention;
Figure 2 illustrated schematically the fiber web machine of Figure 1 in the direction II;
Figure 3 illustrates schematically a service platform arrangement of a fiber web machine according to an embodiment to the invention; and
Figure 4 illustrates a solution according to another embodiment of the invention.

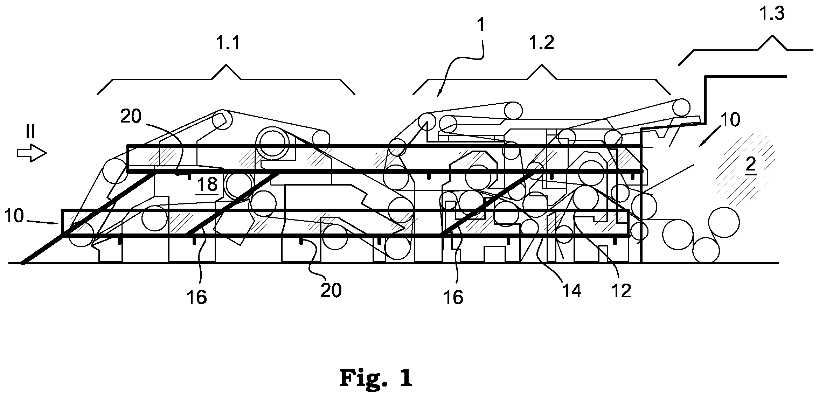

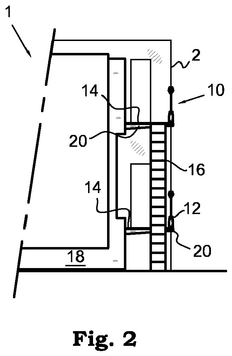

Figure 1 illustrates schematically an embodiment of a fiber web machine 1 according to the invention and a service platform arrangement 10 connected with it. Figure 2 illustrates schematically the fiber web machine of Figure 1 as seen in direction II. For the sake of clarity and by way of an example, only the so-called forming section 1.1 and the press section 1.2 and a part of the drying section 1.3 of a fiber web machine have been presented here. The fiber web machine has been provided with a service platform arrangement 10 comprising at least a railing 12 and a walkway 14. The service platform arrangement has been disposed in connection with the fiber web machine to extend in the machine direction to the area of at least two different machine sections 1.1, 1.2 of the fiber web machine essentially at the same horizontal level. In this way the service platform arrangement continues essentially continuous and essentially at the same horizontal level between at least two machine sections. Thus, when moving between machine sections the use of stairs is minimized and thus operating the fiber web machine is facilitated and more efficient and safer than before. In the embodiment illustrated in Figure 1 the fiber web machine comprises two superimposed service platform arrangements 10 at different vertical levels. Access to the service platform arrangements and moving between the upper and the lower service platform arrangement is provided via stairs 16. Both service platform arrangements extend essentially linear to the area of at least two machine sections. The service platform arrangements are essentially horizontal. When a fiber web machine comprises several superimposed service platform arrangements it is advantageous to arrange each superimposed service platform in the machine direction so that there is access from the same service platform to locations at the vertical level of at least two machine sections. In some applications a service platform arrangement with a very little rise (or decline) may also be used. The rise (or decline) is preferably at the most 1:8.

The railings of the superimposed service platform arrangements have preferably been arranged essentially at the same vertical plane, in other words substantially at one and the same transverse distance from the machine longitudinal center line as shown in Figure 2. Preferably also the vertical wall 2 of the casing, i.e. the hood of the fiber web machine press section 1.2, following the service platform arrangements in the machine direction, in other words the outer wall of the hood, is at said plane. Then the vertical wall of the hood and the railings of the service platform arrangements of the press and drying sections run via the same vertical plane and thus the side line of the fiber web machine is essentially straight. This kind of an arrangement facilitates and makes more efficient the use of the machine hall of the fiber web machine. Further, in the embodiment of Figure 2 the stairs have been provided in the area between the railing 12 and the fiber web machine 1, and thus the stairs are located by the side the fiber web machine 1 of the vertical plane mentioned. Then the stairs, for example when seen from above, do not form projections outside the railing and/or said vertical plane in the transverse direction of the fiber web machine. This arrangement for example permits a safer operation and service of the fiber web machine.

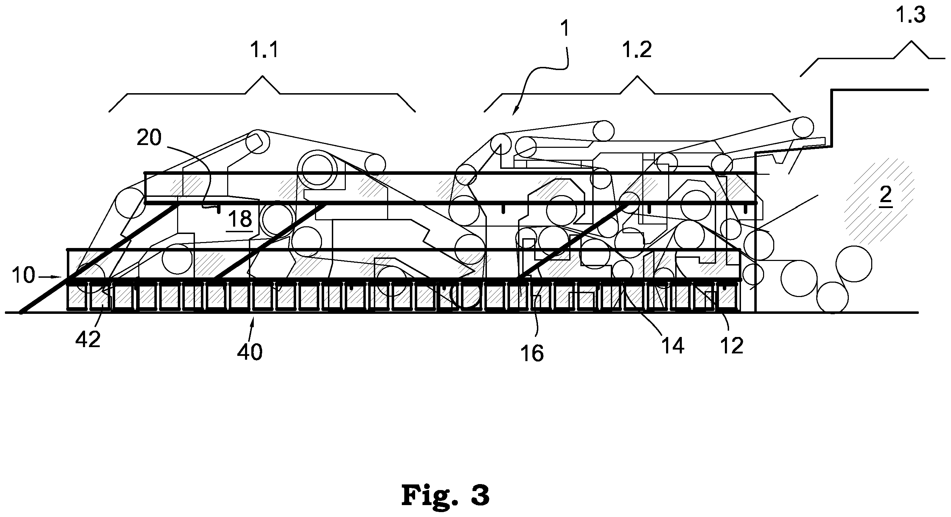

Figure 3 illustrates a solution according to an embodiment of the invention where the fiber web machine is partly separated openably by means of the service platform arrangement from the adjacent walking area of the fiber web machine. This kind of a walking area is typically for example the so-called machine level of the tending side of the fiber web machine. The machine level of a fiber web machine is an area, the most important work area used for servicing and monitoring the machine and the process. In Figure 3 the next service platform arrangement 10 upwards form the machine level in the vertical direction has been provided with a set of walls 40 between the machine level and the service platform arrangement. The set of walls 40 has been disposed in connection with the support girder of the service platform arrangement. The set of walls 40 has been provided to essentially cover direct connection of the fiber web machine to the working zone of the machine level in the vicinity of the fiber web machine. The set of walls is composed of several individual walls 42, which have been secured preferably in a movable manner to the first service platform arrangement above the machine level. The service platform arrangement is essentially straight comprising a guide for moving and supporting the walls 42.

The securing arrangement of the set of walls allows moving each wall in the guide and further turning the wall around a vertical turning axis. In this way the area covered with the walls can be varied by moving the walls in relation to each other in the direction of the fiber web machine and at the same time turning each wall so that they overlap each other. In an extreme situation the walls may be turned even to a fully transverse position and packed one after the other; then the access to the fiber web machine is as open as possible.

Preferably there is a control element such as a guide or a corresponding member provided between the machine level and the walls 42 to support of the lower part of the walls in a controlled way. This kind of an arrangement stops locally the noise, possible splashes, heat etc. of the fiber web machine from advancing to the machine level whereby the effect is directed exactly to the area where for example the operating personnel moves most. When the wall is transparent the monitoring of the operation of the machine is maintained particularly good.

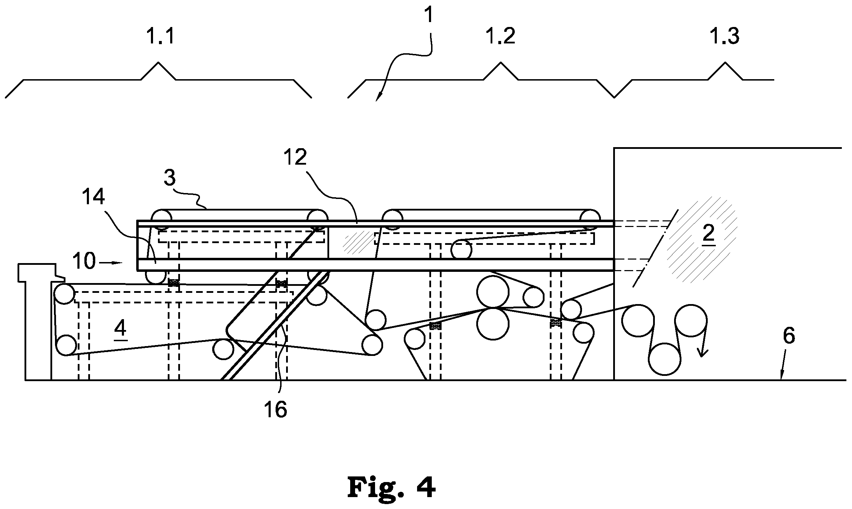

Figure 4 illustrates schematically another embodiment according to the invention of a fiber web machine 1 and a service platform arrangement 10. The Figure illustrates by way of an example the so-called forming section 1.1, the press section 1.2 and only a part of the drying section 1.3, of a fiber web machine. The fiber web machine has been provided with a service platform arrangement 10 comprising at least a railing 12 and a walkway 14. The forming section 1,1 and the press section of the fiber web machine illustrated in Figure 4 have a service platform arrangement 10 extending essentially at one horizontal level to the area of both these sections. The horizontal platform is at such a height that there is sufficient space to work under the walkway 14, i.e. for example at least about 2 m upwards from the machine level 5 of the fiber web machine.

The forming section comprises in the embodiment of Figure 4 a fourdrinier former 4 and a so-called top wire unit 3 provided in connection with it. The horizontal platform including the walkway 14 of the service platform arrangement shared by the forming section 1.1 and the press section is situated in the height direction above the wire of the fourdrinier former of the forming section essentially at the top wire unit 3.

The press section 1.2 is formed of a press provided with a press nip and the only walkway 14 of the service platform unit 10 has been disposed run above the press nip of the press section.

In this embodiment there is provided in the area of the so-called wet end of the fiber web machine, the wet end comprising a fourdrinier former 1,1 provided with a so-called top wire unit, and a one-nip press section 1.2, at one horizontal level a service platform unit 10 which extends in the machine direction from the forming section 1.1 to the end wall of the hood 2 of the press section 1.3 essentially at the same horizontal level in the vertical direction at a distance from the machine level 6, the distance being greater than the vertical distance of the press nip from the machine level 6. The railing 12 of the service platform unit is at the same distance from the machine center line as the side wall of the hood in the machine direction.

The walkway 14 of the service platform unit preferably starts in the machine direction at the top wire unit and then the service of the fourdrinier unit from the head box to the top wire unit is carried out from the machine level 6 or at least without a stationary service platform in this area. The walkway 14 preferably continues after the press section 1.2 inside the hood 2 of the drying section 1.3 at the same horizontal level.

In this way the service platform arrangement continues essentially continuous and essentially at the same horizontal level between two different machine sections. Then, when moving between the machine sections the use of stairs is minimized and thus the operating of the fiber web machine is facilitated, more efficient and safer than before. The access to the service platform arrangement has been provided via stairs 16. The forming and press sections of the fiber web machine itself have been designed low so that they may be serviced with one service platform arrangement, only.

It must be noted that only a few most preferred embodiments of the invention have been presented above. Thus, it is clear that the invention is not limited to the embodiments presented above but it may be modified in many ways within the scope defined by the appended patent claims. The features described in connection with the various embodiments may be used in connection with the other embodiments with the inventive concept and/or the features described may be combined to form different combinations if so wanted and if the technical possibilities for his exist.

## Claims

1. A fiber web machine (1) having a service platform arrangement (10), said service platform arrangement (10) including at least a railing (12) and a walkway (14) provided in connection with each other,
wherein the service platform arrangement (10) is disposed connected with the fiber web machine (1) to extend to at least two different sections (1.1; 1.2;) of the fiber web machine (1) at essentially the same horizontal level, **characterized in that** the railing (12) of the service platform arrangement (10) is disposed to run essentially at one distance from the center line of the fiber web machine (1), and **in that** said distance from the center line of the fiber web machine (1) in the transverse direction is essentially the same as the distance of the outer wall of a hood (2) of the drying section (1.3) following the service platform arrangement (10) in the machine direction.

2. The fiber web machine (1) according to claim 1, **characterized in that** the service platform arrangement (10) includes service platforms at least at two different horizontal levels which both have been provided to extend to at least two different sections (1.1; 1.2;) of the fiber web machine at an essentially horizontal level.

3. The fiber web machine (1) according to claim 2, **characterized in that** the railing (12) of said at least two service platforms at different horizontal levels is disposed at essentially the same vertical plane.

4. The fiber web machine (1) according to claim 1, **characterized in that** the service platform arrangement (10) is disposed to extend to the forming (1.1) and press sections (1.2) of the fiber web machine (1).

5. The fiber web machine (1) according to claim 4, **characterized in that** the forming section (1.1) includes a fourdrinier former (4) provided with a top wire unit (3) and that the walkway (14) of the service platform arrangement (10) is disposed above the fourdrinier wire.

6. The fiber web machine (1) according to claim 5, **characterized in that** the walkway (14) of the service platform arrangement (10) has been disposed to start in the machine direction essentially at the top wire (3) and to extend to the wall surface of a hood (2) of a drying section (1.3) following the press section (1.2).

## Patentansprüche

1. Faserbahnmaschine (1) mit einer Bedienplattformanordnung (10), wobei die Bedienplattformanordnung (10) zumindest ein Geländer (12) und einen Laufsteg (14) aufweist, die in Verbindung miteinander vorgesehen sind,
wobei die Bedienplattformanordnung (10) verbunden mit der Faserbahnmaschine (1) so angeordnet ist, dass sie sich zu zumindest zwei verschiedenen Abschnitten (1.1; 1.2) der Faserbahnmaschine (1) bei im Wesentlichen der gleichen horizontalen Höhe erstreckt,
**dadurch gekennzeichnet, dass**
das Geländer (12) der Bedienplattformanordnung (10) so angeordnet ist, dass es im Wesentlichen bei einem Abstand von der Mittellinie der Faserbahnmaschine (1) läuft, und
dass der Abstand von der Mittellinie der Faserbahnmaschine (1) in der Querrichtung im Wesentlichen der Gleiche ist wie der Abstand der Außenwand einer Haube (2) der Trockenpartie (1.3), die der Bedienplattformanordnung (10) in der Maschinenrichtung folgt.

2. Faserbahnmaschine (1) gemäß Anspruch 1, **dadurch gekennzeichnet, dass** die Bedienplattformanordnung (10) Bedienplattformen zumindest an zwei verschiedenen horizontalen Höhen hat, die beide so vorgesehen sind, dass sie sich zu zumindest zwei verschiedenen Abschnitten (1.1; 1.2) der Faserbahnmaschine an einer im Wesentlichen horizontalen Höhe erstrecken.

3. Faserbahnmaschine (1) gemäß Anspruch 2, **dadurch gekennzeichnet, dass** das Geländer (12) der zumindest zwei Bedienplattformen an verschiedenen horizontalen Höhen an im Wesentlichen der gleichen vertikalen Ebene angeordnet ist.

4. Faserbahnmaschine (1) gemäß Anspruch 1, **dadurch gekennzeichnet, dass** die Bedienplattformanordnung (10) so angeordnet ist, dass sie sich zu der Formerpartie (1.1) und der Pressenpartie (1.2) der Faserbahnmaschine (1) erstreckt.

5. Faserbahnmaschine (1) gemäß Anspruch 4, **dadurch gekennzeichnet, dass** die Formerpartie (1.1) einen Langsiebformer (4) hat, der mit einer oberen Siebeinheit (3) versehen ist, und dass der Laufsteg (14) der Bedienplattformanordnung (10) oberhalb des Langsiebes angeordnet ist.

6. Faserbahnmaschine (1) gemäß Anspruch 5, **dadurch gekennzeichnet, dass** der Laufsteg (14) der Bedienplattformanordnung (10) so angeordnet ist, dass er in der Maschinenrichtung im Wesentlichen an der oberen Siebeinheit (3) beginnt und sich zu der Wandfläche einer Haube (2) einer Trockenpartie (1.3) erstreckt, die der Pressenpartie (1.2) folgt.

## Revendications

1. Machine à bande fibreuse (1) ayant un agencement de plateforme de service (10), ledit agencement de plateforme de service (10) comprenant au moins un garde-corps (12) et une passerelle (14) prévus en relation l'un par rapport à l'autre,
dans laquelle l'agencement de plateforme de service (10) est disposé raccordé à la machine à bande fibreuse (1) pour s'étendre vers au moins deux sections différentes (1.1 ; 1.2) de la machine à bande fibreuse (1) essentiellement au même niveau horizontal,
**caractérisée en ce que** :
le garde-corps (12) de l'agencement de plateforme de service (10) est disposé pour s'étendre essentiellement à une certaine distance de la ligne centrale de la machine à bande fibreuse (1),
et **en ce que** :
ladite distance par rapport à la ligne centrale de la machine à bande fibreuse (1) dans la direction transversale est essentiellement la même que la distance de la paroi externe d'un capot (2) de la section de séchage (1.3) après l'agencement de plateforme de service (10) dans le sens machine.

2. Machine à bande fibreuse (1) selon la revendication 1, **caractérisée en ce que** l'agencement de plateforme de service (10) comprend des plateformes de service au moins à deux niveaux horizontaux différents qui ont été, toutes deux, prévues pour s'étendre vers au moins deux sections différentes (1.1 ; 1.2) de la machine à bande fibreuse à un niveau essentiellement horizontal.

3. Machine à bande fibreuse (1) selon la revendication 2, **caractérisée en ce que** le garde-corps (12) desdites au moins deux plateformes de service à différents niveaux horizontaux, est disposé essentiellement au même niveau vertical.

4. Machine à bande fibreuse (1) selon la revendication 1, **caractérisée en ce que** l'agencement de plateforme de service (10) est disposé pour s'étendre vers les sections de formation (1.1) et de presse (1.2) de la machine à bande fibreuse (1).

5. Machine à bande fibreuse (1) selon la revendication 4, **caractérisée en ce que** la section de formation (1.1) comprend une table plate (4) prévue avec une unité de toile supérieure (3) et **en ce que** la passerelle (14) de l'agencement de plateforme de service (10) est disposée au-dessus de la toile de la machine à table plate.

6. Machine à bande fibreuse (1) selon la revendication 5, **caractérisée en ce que** la passerelle (14) de l'agencement de plateforme de service (10) a été disposée pour démarrer, dans le sens machine, essentiellement au niveau de l'unité de toile supérieure (3) et pour s'étendre vers la surface de paroi du capot (2) d'une section de séchage (1.3) après la section de presse (1.2).
